# EUROPEAN PATENT SPECIFICATION

(11) **EP 0 487 655 B1**
(45) Date of publication and mention of the grant of the patent: **29.05.1996**
(21) Application number: 91906109.3
(22) Date of filing: 11.03.1991
(51) Int. Cl.: C05F 11/04, C05G 1/00, C10F 7/06

(54) **CULTIVATION SUBSTRATES OF PEAT**
KULTURSUBSTRATE AUF DER BASIS VON TORF
SUBSTRATS DE TOURBE POUR LES PLANTES

(30) Priority: 13.03.1990 SE 9000897
(43) Date of publication of application: 03.06.1992
(73) Proprietor: HASSELFORS GARDEN AB, S-690 33 Hasselfors (SE)
(72) Inventor: REMPE, Peter, S-690 33 Hasselfors (SE)
(74) Representative: Wiklund, Ingrid Helena
(86) International application number: SE9100182
(87) International publication number: WO9113845

(56) References cited:
- DE-B- 1 145 193
- DE-B- 1 592 573
- DK-C- 0 048 343
- GB-A- 1 491 940
- US-A- 4 185 987

## Description

The present invention relates to cultivation substrates of peat.

It is known to use compressed peat in the shape of various types of briquettes and the like as a growing substrate for seed plants and cuttings. To enable these briquettes to maintain their shape they may be stabilized in different ways, e.g. by means of a surrounding net or by means of a binding agent, often bitumen.

GB-A-1,491,940 discloses cutting of peat into big pieces of a size of e.g. 8 x 24 x 32 cm, which are then compressed to a thickness of 10 mm and finally cut into pieces measuring 8 x 8 cm.

DE-A-1,145,193 discloses compression of peat into briquettes, which are then ground to a granulated product having a particle size of e.g. between 2 and 5 mm.

To enhance the growing it is desirable that the growing substrate also contains some kind of a fertilizer. The incorporation of a fertilizer in growing substrates of this kind may be performed in various ways but is normally effected by mixing the peat with a suitable fertilizer.

Irrespective whether or not the growing substrate has got an admixture of fertilizer it has been usual, as set forth above, to compress the peat into briquettes or the like to form the growing substrate into units that may be easily handled and also to reduce the volume. However, briquettes or shaped bodies of the just mentioned kind normally suffer from the drawback that they absorb water rather slowly, viz. of the magnitude from a few hours up to nearly a full day unto they have been completely saturated.

To remedy the just mentioned problem it has been proposed in our patent SE application nr 1061-70 that the soil improving or growing substrate as disclosed therein, which essentially consists of peat or peat mould, should comprise a granule like mass, manufactured by a high compression of peat or peat mould, which after the compression has been by mechanical treatment, minced up into granulate shape without noticable change of the structure of the individual granules. The expression "granule shape" was used by that time to define peat particles of a size just about that of half *a* rice grain, i.e. with a greatest dimension of the order of about 2,0 mm. This was the granule size of the product which for a rather restricted period of time, as a trial, was brought out on a rather restricted market.

In our above mentioned patent application it was mentioned, without any direct definition, that the granule shaped mass could contain one or more fertilizers, where long time active nitrogen is mentioned, and also humus decomposing bacteria as well as mycel which are preventive and antagonistic to harmful fungi.

The just described granule shaped growing substrate was rather satisfying for many applications, among other things in that the growing substrate in question remedied the earlier water absorption problem, viz. the problem of ensuring a complete water absorption within the period of time the planting job was normally performed and during which the result of the job could be observed.

However, continued jobs with the known granule shaped growing substrate have shown that it suffers from some drawbacks.

One such drawback is that it is necessary, to permit the necessary granulation into granules of the order of about 2 mm whithout noticable change of the structure of the individual grains, to compress the original peat mass very highly, viz. of the order of above about 10 : 1, sometimes up to about 15 : 1. Of course, such a strong compression puts up severe requirements on the machine equipment, and is in practice expensive.

Another disadvantage is that the manufacture and handling of the granule shaped growing substrate becomes unnecessary "littering". The fine granulation of the high compressed shaped bodies of peat down to a granule size of about 2 mm entails that in this connection unnecessarily many peat fibres are cut off or torn off so that the final growing substrate mass contains an unacceptable proportion of what may be termed as "peat dust", which becomes a disadvantage both during the manufacture and by the use of the growing substrate.

The above discussed granulation, which leads to that peat dust is formed, brings about a change of particularly the physical properties of the substrate in such a manner, that an unacceptable proportion of fine particles with a too strong water binding ability will be obtained. The so called pF-curve is affected in a negative direction. Expressed popularly, the ability of the plants to absorb water is impaired, simultaneously as the oxygen supply is reduced.

Of course, there will also be a considerable waste, and storing losses. Also the costs for such an unnecessary far reaching granulation must be considered in this context.

Further, the fine granulation of the high compressed peat bodies into granules also brings along the drawback that the pots etc. that are used by the planting may be filled up somewhat excessively, while forgetting the strong swelling ability of the growing substrate. The result is that the arowing substrate, after watering up, will be unnecessary compact at the bottom of the pot, as compared to a looser growing substrate in the uppermost portions of the pot.

The present invention aims at providing a growing subtrate which does not exhibit the above mentioned drawbacks.

To the just mentioned end there is proposed according to the present invention a growing substrate, which is entirely or essentially composed of peat and is manufactured by a high compression of peat or peat mould into a shaped body, which shaped body is then minced, where the characterizing feature of the crowing substrate in question is that the compression is of the peat limited to one tenth of its initial volume or slightly lower, preferably about one ninth, and that the compressed peat bodies, after the compression, are minced up into essentially cubic bodies of the order of 5 x 5 x 5 to 15 x 15 x 15mm, preferably, about 8 x 8 x 10 mm.

In the manufacture shaped peat bodies having the above mentioned degree of compression are comparatively easily made, and they are comparatively easily handled, with no risk for damages. Further, they may comparatively easily and without unnecessary dust forming be minced up into cubic pieces with a size of the above mentioned order, and these pieces may be handled easily and readily, similarly without unnecessary dust forming. What is important in this context is, however, that compressed peat cubes or "dices" of the kind defined may be watered up very quickly and thoroughly to form a homogenous mass with a satisfying porosity to satisfy the oxygen absorption ability of the plants.

The ability to a fresh growth of the plants is dependent on a plurality of factors, among which, in the present context, the most important ones appear to be an even and rich supply of fertilizer, water for transport thereof, and oxygen. These factors must be in balance with each other, which is achieved if the growing substrate according to the invention, prior to the compression into shaped peat bodies, is admixed with a fertilizer as follows, calculated in kgs per m³ of the ultimate growing substrate, i.g. when the growing substrate has swelled after watering, viz.:
2 - 6 kg lime
1 - 3 kg Dolomit
1 - 2 kg Blåkorn™ (NPK 12:5:14)
0,1 - 0,3 kg FTE (micro fertilizing agents)

Blåkorn™ is a trademark for a fertilizing agent comprising N, P and K in a ratio of 12:5:14.

Due to the above mentioned moderate mincing of the basic material and due to the moderate compressing forces the predetermined fractional compositions of the basic material may be retained comparatively intact. Thereby a possibility is achieved to effectively control the balance between the water retaining and air retaining pores of the ultimate growing substrate. Thereby, a possibility to reproduction of the manufacturing process is achieved which has not been possible to achieve previously, and the system becomes considerably more well defined with respect to physical properties.

## Claims

1. A plant growing substrate, which is entirely or essentially composed of peat and is manufactured by a high compression of peat or peat mould into a shaped body, which shaped body is then minced, **characterized in** that the compression of the peat is limited to one tenth of its initial volume or slightly lower, preferably about one ninth, and that the compressed peat bodies, after the compression, are minced up into essentially cubic bodies of the order of 5 x 5 x 5 to 15 x 15 x 15mm, preferably about 8 X 8 x 10 mm.

2. A plant growing substrate according to claim 1, **characterized in** that the growing substrate, prior to the compression into high compressed shaped peat bodies, receives an admixture of a fertilizer as follows, calculated in kgs per m³ of the ultimate growing substrate, i.g. when the growing substrate has swelled after watering, viz.:
2 - kg lime
1 - 3 kg Dolomit
1 - 2 kg Blåkorn™ (NPK 12:5:14)
0,1 - 0,3 kg FTE (micro fertilizing agents).

## Patentansprüche

1. Pflanzenwuchssubstrat, welches vollständig oder im wesentlichen aus Torf zusammengesetzt ist und durch eine hohe Verdichtung von Torf oder Torferde zu einem Formkörper hergestellt wird, wobei dieser Formkörper dann zerkleinert wird, **dadurch gekennzeichnet**, daß die Verdichtung des Torfs auf ein Zehntel seines Ausgangsvolumens oder etwas weniger, vorzugsweise etwa ein Neuntel beschränkt ist, und daß die verdichteten Torfkörper nach der Verdichtung zu im wesentlichen kubischen Körpern in der Größenordnung von 5 x 5 x 5 bis 15 x 15 x 15 mm, vorzugsweise etwa 8 x 8 x 10 mm zerkleinert werden.

2. Pflanzenwuchssubstrat nach Anspruch 1, **dadurch gekennzeichnet,** daß das Wuchssubstrat vor der Verdichtung zu hochverdichteten Torfformkörpern eine Beimischung eines Düngemittels wie folgt erhält, angegeben in kg pro m³ des fertigen Wuchssubstrats, i.a., wenn das Wuchssubstrat nach dem Wässern gequollen ist, nämlich:
2 - 6 kg Kalk
1 - 3 kg Dolomit
1 - 2 kg Blåkorn™ (NPK 12:5:14)
0,1 - 0,3 kg FTE (Mikrodüngemittel).

## Revendications

1. Substrat de croissance de végétaux qui est totalement ou essentiellement constitué de tourbe et qui est produit par une compression élevée de la tourbe ou terre de tourbière en un corps façonné, lequel corps façonné est ensuite coupé en morceaux, caractérisé en ce que la compression de la tourbe est limitée à un dixième de son volume initial ou à un peu moins, de préférence à un neuvième environ, et en ce que les corps de tourbe compressés, après la compression, sont coupés en des corps essentiellement cubiques, de l'ordre de 5x5 x5 à 15 x 15 x 15 mm, de préférence d'environ 8 x 8 x 10 mm.

2. Substrat de croissance de végétaux selon la revendication 1, caractérisé en ce que le substrat de croissance, avant la compression en les corps de tourbe façonnés très compressés, reçoit un mélange d'un fertilisant de la façon suivante, calculé en kilogrammes par mètre cube du substrat de croissance final, en général lorsque le substrat de croissance a été gonflé après arrosage, à savoir :
2 à 6 kg de chaux,
1 à 3 kg de dolomite,
1 à 2 kg de Blackorn® (NPK 12:5:14),
0,1 à 3 kg de FTE (agents de microfertilisation).
